Europäisches Patentamt

European Patent Office

Office européen des brevets

(19)

(11) Veröffentlichungsnummer: **0 212 653**
**B1**

(12) **EUROPÄISCHE PATENTSCHRIFT**

(45) Veröffentlichungstag der Patentschrift:
18.04.90

(21) Anmeldenummer: 86111757.0

(22) Anmeldetag: 25.08.86

(51) Int. Cl.⁴: **B65D 90/52**, B60P 3/24,
B61D 5/00

(54) **Transporttank mit Schwallschutzelementen.**

(30) Priorität: 23.08.85 DE 3530228

(43) Veröffentlichungstag der Anmeldung:
04.03.87 Patentblatt 87/10

(45) Bekanntmachung des Hinweises auf die Patenterteilung:
18.04.90 Patentblatt 90/16

(84) Benannte Vertragsstaaten:
AT BE CH FR GB IT LI NL SE

(56) Entgegenhaltungen:
DE-A- 2 133 023
DE-C- 468 814
US-A- 3 795 204

(73) Patentinhaber: Westerwälder Eisenwerk Gerhard GmbH,
Ringstrasse 20, D-5241 Weltefeld(DE)

(72) Erfinder: Gerhard, Helmut, Im Schlossteinchen 31,
D-5241 Weltefeld(DE)

(74) Vertreter: Strehl, Schübel-Hopf, Groening,
Maximilianstrasse 54 Postfach 22 14 55,
D-8000 München 22(DE)

**Beschreibung**

Die Erfindung betrifft einen Transporttank der im ersten Teil des Anspruchs 1 angegebenen Gattung. Ein solcher Tank kann als selbständiger Transport-Tankcontainer ausgebildet sein oder Teil eines Tankfahrzeugs bilden.

Generell besteht die Tendenz, Transporttanks so groß wie möglich zu bauen, wobei heutzutage für 20-Fuß-Container die Obergrenze bei einem Fassungsvermögen von ca. 27 m³ für eine ISO-genormte Länge von ca. 6 m liegt. Andererseits liegt das zulässige Bruttogewicht für solche Transporttanks bei etwas über 300 kN. Bei Befüllung eines großen Tanks mit schweren Flüssigkeiten wird diese Gewichtsgrenze bereits bei Teilfüllung erreicht. Da beim Transport von teilweise gefüllten Tanks infolge von Verzögerungen und bei Kurvenfahrten erhebliche Schwerpunktverschiebungen auftreten, verlangen internationale Vorschriften, daß ein Transporttank für Flüssigkeiten bei einer Befüllung unter 80% mit Schwallschutzwänden versehen sein muß, wobei 70% der Tank-Querschnittsfläche schwallgeschützt sein soll. Dieser Wert von 70% ist allerdings bisher weder empirisch noch rechnerisch hinreichend begründet worden.

In der Zeitschrift "Maschinenmarkt-europa industrie revue" 3–70, Seiten 20 bis 22, befaßt sich Gerhard Krause mit Straßentankfahrzeugen zur Beförderung gefährlicher Güter und stellt in diesem Aufsatz einen Tank vor, der in seinem Innern mit in Quer- und Längsrichtung verlaufenden Schwallschutzwänden versehen ist. Diese Schwallschutzwänden werden im Zuge der Fertigung in den Tank fest eingeschweißt. Da sie beidseitig in Längs- und Querrichtung dynamisch mit Flüssigkeitssäulen beaufschlagt werden, müssen sie selbst und ihre Befestigung am inneren Mantelumfang stabil und ermüdungssicher sein. Wegen der stoßweise auftretenden Schwallkräfte sind dabei lange, den Tankumfang vollständig oder zum größeren Teil abdeckende Doppelkehlnähte erforderlich. Andererseits sind zur Entlüftung und vollständigen Entleerung des Tanks im Scheitel- und Sohlenbereich der Schwallschutzbleche Öffnungen nötig. An den Endpunkten dieser Öffnungen sind zum Abbau von hier auftretenden Spannungsspitzen kostspielige Verstärkungsplatten unerläßlich. Da ferner nicht jedes durch Schwallschutzwände abgetrennte Tankabteil ein Mannloch aufweist, ist zur Gewährleistung von Inspektion und Reinigung jeweils noch eine größere Durchstiegsöffnung nötig. Derartige Konstruktionen mit fest eingeschweißten Schwallschutzwänden sind somit aufwendig in der Herstellung, beeinträchtigen die Reinigung, erhöhen das Taragewicht des Transporttanks und weisen erhebliche Ermüdungs- und damit Leckgefahren auf. Abgesehen davon sind fest eingebaute Schwallschutzwände nur dann sinnvoll, wenn vorauszusehen ist, daß der Tank immer wieder mit Teilfüllung transportiert wird.

Ein Transporttank der eingangs bezeichneten Gattung ist aus US-A 3 795 204 bekannt. Zur Ermöglichung eines nachträglichen Einbaus besteht die bekannte Schwallschutz-Anordungung aus Querwänden, die aus einzelnen Teilen zusammengesetzt und durch scherenartig eingefügte Stäbe untereinander verstrebt sind. Die gesamte Anordnung ist gegenüber den Tankböden federnd abgestützt, wobei sämtliche Querwände mit mindestens einem Teil ihrer Außenkanten an der Tankinnenwand anliegen. Schwallbewegungen des Tankinhalts führen dabei zu einer gewissen Hin- und Herbewegung der Schwallwände, woraus sich die Gefahr ergibt, daß diese die gegebenenfalls beschichtete oder polierte Tankinnenwand verkratzen. Ferner besteht die Gefahr einer Funkenbildung, die insbesondere bei explosivem Tankinhalt katastrophal wäre.

Der Erfindung liegt die Aufgabe zugrunde, eine nachträglich in einen Transporttank einbaubare Schwallschutzanordnung anzugeben, die eine möglichst starre Fixierung der Schwallschutzelemente gestattet, dadurch eine hohe Schwallschutzwirkung vermittelt und gleichzeitig eine Berührung zwischen den Schwallschutzelementen und der Tankinnenwand vermeidet.

Diese Aufgabe wird durch die im Anspruch 1 gekennzeichnete Erfindung gelöst. Danach wird die Schwallschutzanordnung gegenüber drei Punkten des Tanks verspannt, wobei zur Fixierung eine Keilwirkung ausgenutzt wird, die aus den Wölbungen der Tankböden bzw. der Krempenbereiche resultiert.

Die Ausgestaltungen der Erfindung nach den Ansprüchen 2 und 3 sind insofern von Vorteil, als sie eine einfache und sichere Möglichkeit zur Fixierung der Schwallschutzelemente an den Halteeinrichtungen bieten. Wird gemäß Anspruch 3 mit einem Kreuzprofil mit zwei Querstegen gearbeitet, so sollten diese im eingebauten Zustand senkrecht übereinander angeordnet sein, um sowohl dem Gestänge selbst möglichst große Steifigkeit gegen Durchbiegen zu verleihen als auch eine möglichst stabile Befestigung für seitlich herausragende Schwallschutzelemente zu gestatten.

Vom Standpunkt der Herstellung, des Einführens in den Tank und der Montage innerhalb des Tanks besonders günstige Ausgestaltungen der Schwallschutzelemente sind in den Ansprüchen 4 bis 7 angegeben. Das danach vorgesehene Bandmaterial kann in seiner Breite den größten lichten Durchmesser des Mannlochs überschreiten und beim Einbringen in den Tank in Längesrichtung elastisch gebogen werden, um im Tankinnern eine möglichst große schwallhemmende "Segel"-Fläche zur Verfügung zu stellen. Die Ω-förmige Gestaltung nach Anspruch 5 ist nicht nur vom Einbau her günstig, sondern erbringt den zusätzlichen Vorteil, daß zwei in Abstand hintereinander stehende Schwallschutzflächen erzielt werden, die entsprechend wirksame Turbulenzen und damit doppelten Schwallverzehr erzeugen und im wesentlichen in sich selbst elastisch auffangen können.

In der bevorzugten Weiterbildung der Erfindung nach Anspruch 8 werden die Schwallschutzelemente im Tankinnern von der Flüssigkeit umspült, was einerseits zu Turbulenzbildung und damit Schwallverzehr beiträgt und andererseits Beschädigungen der Tankinnenwand durch die Schwallschutzelemente verhindert. Die Gestaltung nach Anspruch 9 stellt ein weiteres Mittel zur möglichst wirksamen Reduzierung von Schwallkräften im gesamten Tankinnenraum dar.

Bevorzugte Ausführungsbeispiele der Erfindung werden nachstehend anhand der Zeichnungen näher erläutert. In den Zeichnungen zeigt

Figur 1 einen schematischen Längsschnitt durch einen Transporttank mit darin eingebauten Schwallelementen,

Figur 2 einen Querschnitt durch den Tank nach Figur 1 längs der Linie II–II,

Figur 3 ein Detail der Figur 1 zur Veranschaulichung der Form und Befestigung von Schwallschutzelementen an einer Halteeinrichtung,

Figur 4 und 5 Querschnitte längs den Linien IV und V nach Figur 3, und

Figur 6 eine der Figur 4 ähnliche. Darstellung zur Veranschaulichung einer anderen Querschnittsform für das Gestänge der Halteeinrichtung.

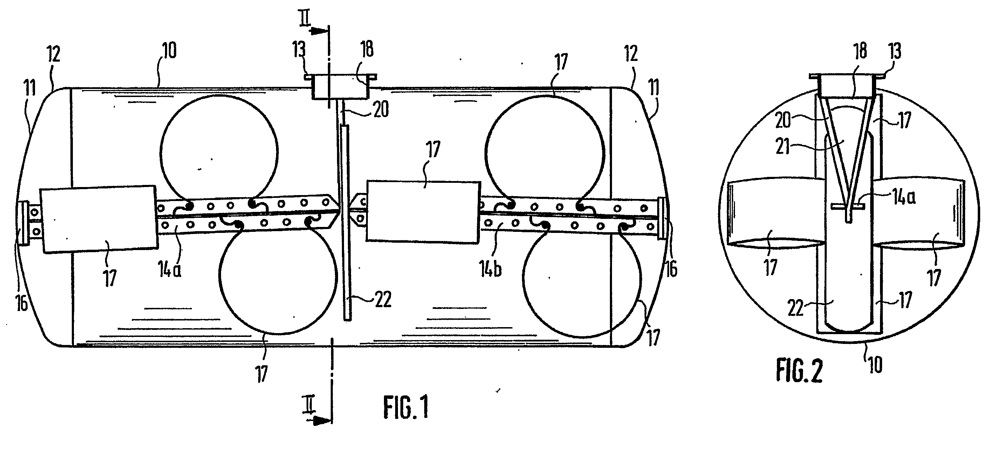

Der in Figur 1 und 2 gezeigte Transporttank weist einen kreiszylindrischen Tankmantel 10 auf, der an jedem Ende durch einen angeschweißten, etwa korbbogenförmigen Tankboden 11 abgeschlossen ist. Die Tankböden 11 sind in ihrem Hauptteil sphärisch gekrümmt und gehen mit einem stärker gekrümmten Krempenbereich 12 in die Querschnittsform des Tankmantels 10 über. An seiner obersten Stelle weist der Tankmantel etwa in der Mitte seiner Länge ein mit einem Deckel verschließbares Mannloch 13 auf, durch das ein Arbeiter zur Inspektion und zur Durchführung von Motagearbeiten in das Tankinnere einsteigen kann.

Längs des Transporttanks verlaufen zwei Schienen 14a, 14b, die gemäß Figur 2 ein einfaches Kreuzprofil aufweisen.

Die beiden Schienen 14a, 14b sind mit ihren inneren Enden am unteren Ende eines generell V-förmigen Gestänges 20 befestigt und an ihren beiden äußersten Enden jeweils mit einem Kreisring oder Fuß versehen, der sich – wie in Figur 1 angedeutet – jeweils über einen elastischen O-Ring oder eine Lippe 16 im zentrischen Bereich des betreffenden Tankbodens 11 abstützt.

Das Gestänge 20 ist seinerseits mit seinem oberen Ende an zwei diagonal gegenüberliegenden Stellen eines in das Mannloch 13 eingesetzten Rohrstutzens 18 montiert. Das Gestänge 20 kann an den Rohrstutzen 18 angeschweißt sein und mit diesem in das Mannloch 13 eingesetzt werden. Ferner kann das Gestänge 20 in seinem V-förmigen Innenbereich mit einer generell dreieckigen Platte 21 sowie an seiner Außen- und Unterseite mit einer Platte 22 versehen werden, wobei die beiden Platten 21 und 22 im eingebauten Zustand in einer Querschnittsebene des Tanks stehen und zusätzlich ein- oder zweiseitig gewölbte Schwallelemente bilden.

An den Schienen 14a, 14b sind in dem Ausführungsbeispiel nach Figur 1 insgesamt acht Schwallschutzelemente 17 befestigt, die jeweils aus einem generell Ω-förmig gebogenen Materialstreifen bestehen. In der Darstellung nach Figur 1 erstrecken sich von diesen Schwallschutzelementen 17 vier in horizontaler und vier in vertikaler Richtung, dabei zwei bezüglich der Zeichenebene nach hinten, zwei nach vorne, zwei nach oben und zwei nach unten. Der Materialstreifen kann eine Breite haben, die etwas geringer ist als der Durchmesser des Mannlochs 13. Jedes Schwallschutzelement 17 kann aus verhältnismäßig steifem Material bestehen und im vorgeformten Zustand durch das Mannloch 13 in das Tankinnere hineingedreht werden. Alternativ ist es auch möglich, einen flexiblen Materialstreifen zu verwenden, dessen Breite größer sein kann als der Durchmesser des Mannlochs; in diesem Fall wird der Materialstreifen unter elastischer Verbiegung um seine Längsachse durch das Mannloch 13 hindurchgeführt und im Tankinnern während seiner Befestigung an der jeweiligen Schiene 14a, 14b auf die dargestellte Ω-Form gebogen. Auf diese Weise wird eine entsprechend noch größere schwallhemmende Fläche erreicht. Die einzelnen Materialbänder sind so bemessen, daß die Schwallelemente 17 im eingebauten Zustand die Tankinnenwand nich berühren, um .Beschädigungen der möglicherweise beschichteten oder geschliffenen Tankwand zu vermeiden. Andererseits reichen die Schwallschutzelemente möglichst weit nach außen, um den auftretenden Flüssigkeitsströmungen eine möglichst große Fläche darzubieten. Wie in Figur 1 dargestellt, sind die Schwallschutzelemente 17 in Längsrichtung des Tanks jeweils abwechselnd in horizontaler und vertikaler Erstreckung angeordnet, um durch möglichst große Turbulenzen eine hohe schwallhemmende Wirkung zu erzeugen.

Die an den Schienen 14a, 14b mit senkrechter Erstreckung befestigten Ω-förmigen Schwallschutzelemente 17 sind mit derartiger Versetzung längs der jeweiligen Schiene 14a, 14b angeordnet, daß der Tankinnenraum möglichst effektiv durch Schwallschutzelemente unterteilt wird. Wie dargestellt, können die verschiedenen Schwallschutzelemente 17 unterschiedlich groß sein. Sie sollten in dem jeweils zur Verfügung stehenden Raum möglichst viel schwallhemmende Fläche bilden. Zwar ist eine Berührung gegenüber der Tankinnenwand unerwünscht, doch kann eine gegenseitige Abstützung benachbarter Schwallschutzelemente 17 zur Versteifung zweckmäßig sein.

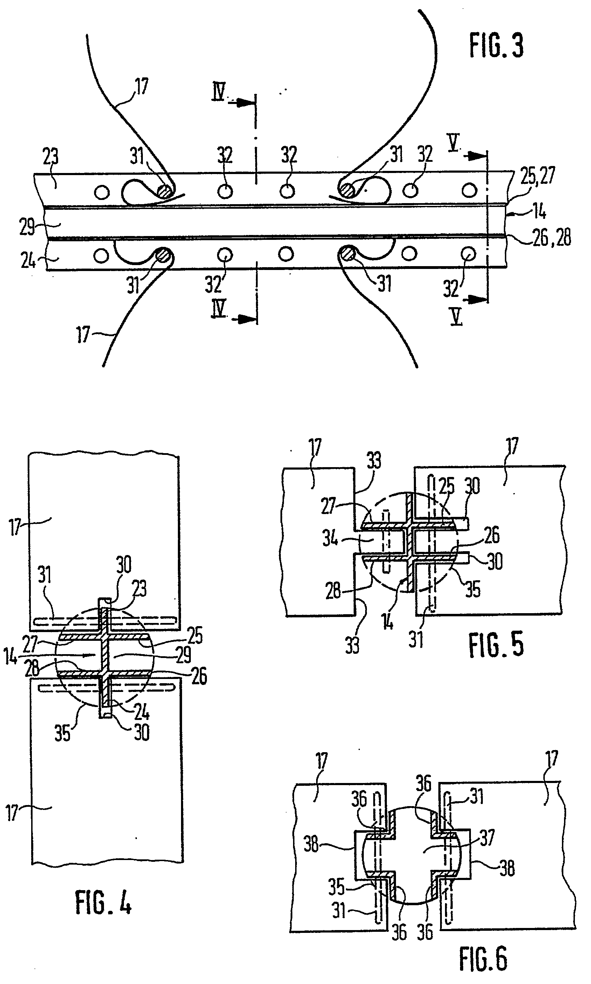

In Figur 3 bis 5 ist die Befestigung der generell Ω-förmig gebogenen, aus Metall oder Kunststoff bestehenden Schwallschutzelemente 17 an den Schienen 14 bzw. 14a, 14b dargestellt, wobei zum Unterschied von Figur 2 angenommen ist, daß das Profil dieser Schienen das eines Doppelkreuzes ("Lothringer Kreuz") mit einem nach oben ragenden Steg 23, einem nach unten ragenden Steg 24, zwei parallel übereinander angeordneten, nach rechts ragenden Stegen 25, 26, zwei parallel übereinander angeordneten, nach links ragenden Stegen 27, 28 und einem mittleren Steg 29 ist. Wie in Figur 4 gezeigt, sind die in senkrechte Richtung verlaufenden Schwallschutzelemente 17 in ihrem inneren Bereich jeweils mit einem mittleren Schlitz 30 versehen, in den der obere Steg 23 bzw. der untere Steg 24 der Schiene 14 eingreift. Die inneren Bereiche dieser generell Ω-förmig gebogenen Schwallschutzelemente 17 sind dabei, wie in Figur 3 oben gezeigt, zunächst nach außen und dann wieder nach innen gebogen. Sie sind innerhalb ihrer innen liegenden Biegungen durch Bolzen 31 fixiert, die jeweils eine einer Vielzahl von im oberen Steg 23 vorgesehenen Bohrungen 32 durchsetzen, und stützen sich mit ihren untersten Enden an den oberen horizontalen Stegen 25 bzw. 27 der Schiene 14 ab. Auf diese Weise wird eine federnde Fixierung der Schwallschutzelemente 17 erreicht. Wie in Figur 4 veranschaulicht, haben die Bolzen 31 eine Länge, die etwa der Breite der Schwallschutzelemente 17 entspricht.

Im unteren Teil der Figur 3 ist eine etwas andere Ausgestaltung gezeigt, bei der die Enden der etwa Ω-fömig gebogenen Schwallschutzelemente 17 nicht mehr nach innen zurückgebogen sind, sondern etwa senkrecht auf die unteren Stege 26, 28 der Schiene 14 treffen, so daß auch hier über die Fixierung mittles Bolzen 31 eine elastische Einspannug erreicht wird.

In der rechten Hälfte der Figur 5 ist gezeigt, daß die horizontal stehenden Schwallschutzelemente 17 in den Bereichen, in denen sie an der Schiene 14 befestigt sind, mit zwei parallelen Schlitzen 30 versehen sind, in die die beiden seitlichen Stege 25, 26 der Schiene 14 eingreifen. Im übrigen sind die seitlichen Schwallschutzelemente 17 genauso gestaltet und befestigt wie im oberen oder im unteren Teil der Figur 3 veranschaulicht. Anstelle der Schlitze 30 können auch, wie im linken Teil der Figur 5 veranschaulicht, seitliche Ausschnitte 33 vorgesehen sein, die einen zwischen die beiden seitlichen Stege 27, 28 der Schiene 14 passenden mittleren Bereich 34 übrig lassen.

Bei Verwendung eines Doppelkreuzprofils gemäß Figur 4 oder 5 ist es zweckmäßig, die Schienen 14a, 14b derart in den Tank einzubauen, daß die beiden Stege 23 und 24 senkrecht, die vier übrigen Stege 25 bis 28 dagegen horizontal verlaufen, so daß die Bolzen 31, die die seitlich herausragenden Schwallschutzelemente 17 fixieren, in entsprechende Bohrungen in zwei gegenüberliegenden Stegen eingreifen und dadurch eine bessere Verankerung der seitlichen Schwallschutzelemente gegen die Schwerkraft bewirken.

In Figur 4 und 5 ist gezeigt, daß die Enden sämtlicher Stege 23 bis 28 auf einem (gestrichelt gezeigten) Kreis 35 liegen, dessen Durchmesser um ein solches Maß geringer ist als der Durchmesser des Mannlochs 13, daß sich die Schienen 14 in der erforderlichen Weise schräg in den Tank einführen lassen. Da die Schiene 14 nicht nur die Schwallschutzelemente tragen soll sondern selbst noch als Schwallschutzelement zur Reduzierung von quer zur Tankachse wirkenden Schwallkräften dienen kann, soll das Profil der Schiene unter Berücksichtigung der Einführbarkeit durch das Mannloch 13 möglichst groß gehalten sein.

Gemäß Figur 6 wird das Kreuzprofil der Schiene 14 durch vier Einzelschienen 36 mit jeweils L-förmigem Querschnitt erreicht, die über mehrere, in Längsrichtung des Tanks in Abstand voneinander angeordnete kreuzförmige Knotenbleche 37 miteinander verbunden und derart dimensioniert und angeordnet, daß sämtliche acht Außenkanten der Einzelschienen 36 auf dem oben erwähnten (auch in Figur 6 gestrichelt gezeigten) Kreis 35 liegen. Bei der Ausgestaltung nach Figur 6 ergeben sich zur Befestigung sowohl der senkrecht als auch der waagerecht verlaufenden Schwallschutzelemente 17 jeweils zwei in Abstand voneinander angeordnete Stege, in denen Bohrungen zur Durchführung von Bolzen 31 vorgesehen sind. In Figur 6 ist eine weitere Ausgestaltung der inneren Enden der einzelnen Schwallschutzelemente 17 gezeigt, bei denen anstelle der in der rechten Hälfte der Figur 5 angenommenen zwei Schlitze 30 ein innerer, im Profil U-förmiger Ausschnitt 38 vorgesehen ist, der mit seinen beiden zueinander parallelen Seiten an den Außenflächen der von den Einzelschienen 36 gebildeten Stege anliegt.

Soll ein bestehender Tank bei Bedarf, das heißt wenn er mit Teilfüllung transportiert werden soll, mit Schwallschutzelementen versehen werden, so werden zunächst die Schiene 14a, 14b durch das Mannloch 13 in den Tank eingebracht und dort in der in Figur 1 und 2 gezeigten Weise zusammengebaut und im Tankinnern befestigt. Bei geeigneter Dimensionierung läßt sich eine Verspannung gegenüber der Tankwand erzielen, die bei der kniehebelartigen Ausführung nach Figur 1 durch ein abschließendes senkrechtes Verschieben des Rohrstutzens 18 vor dessen Verankerung im Mannloch 13 erreicht wird. Sodann werden durch das Mannloch 13 die einzelnen Materialstreifen eingeführt und in der in Figur 3 bis 6 gezeigten Weise an den Schienen fixiert.

Wie anhand von Figur 4 bis 6 erläutert, läßt sich das Profil der dort gezeigten Schienen 14 bzw. 36 von einem Kreis 35 umschreiben, der um so viel kleiner ist als das Mannloch 13, daß die zusammengebaute Schiene durch das Mannloch in das Tankinnere eingeführt werden kann. Bei dem Ausführungsbeispiel nach Figur 7 wird dagegen das die Schwallschutzelemente 17 tragende Gestänge aus drei einzelnen Stäben 39 aufgebaut, die einzeln durch das Mannloch 13 eingeführt und im Tankinnern parallel zueinander ausgerichtet und über dreieckige Knotenbleche 40 lösbar miteinander verbunden werden. Jeder dieser Stäbe 39 weist einen kreuzförmigen Querschnitt auf, wobei die einzelnen Schenkel dieser Stäbe jeweils paarweise zueinander senkrecht und parallel zu den Begrenzungskanten der Schwallschutzelemente 17 verlaufen. In Figur 7 bilden die drei Stäbe 39 ein gleichseitiges Dreieck, dessen Kantenlänge etwas größer ist als die Breite der Schwallschutzelemente 17, die selbst – wie oben ausgeführt– breiter sein können als der Durchmesser des Mannlochs 13. Auf diese Weise wird die Gesamt-Querschnittsfläche des aus den drei Stäben 39 gebildeten Gestänges verhälnismäßig groß, was der Steifigkeit zugute kommt. Außerdem definieren die Enden dieses Gestänges entsprechend große Auflageflächen, so daß bei einer Montage etwa gemäß Figur 1 die Möglichkeit, daß sich das Gestänge aus seiner gewünschten axialen Lage verschiebt, weiter reduziert ist.

**Patentansprüche**

1. Transporttank für Flüssigkeiten, der ein Mannloch (13) aufweist und in seinem Inneren mit Schwallschutzelementen (17) versehen ist, die in ihrer Größe so bemessen sind, daß sie durch das Mannloch (13) einführbar sind, und die an einem Gestänge (14, 14a, 14b) lösbar befestigt sind, das ebenfalls so bemessen ist, daß es durch das Mannloch (13) einführbar ist, dadurch gekennzeichnet, daß das Gestänge (14, 14a, 14b) aus zwei Teilen zusammengesetzt ist, die im eingebauten Zustand über ein Kniehebelgelenk miteinander verbunden und an einem in das Mannloch (13) einsetzbaren Bauteil (18) abgestützt sowie zwischen die Wölbungen oder in den Krempenbereichen (12) der beiden stirnseitigen Tankböden (11) eingespannt sind.

2. Transporttank nach Anspruch 1, dadurch gekennzeichnet, daß das Gestänge Schienen (14, 14a, 14b) mit Kreuzprofil umfaßt.

3. Transporttank nach Anspruch 2, dadurch gekennzeichnet, daß das Kreuzprofil des Gestänges (14) in mindestens einer der beiden zueinander senkrechten Querschnittsrichtungen zwei Stege (25, 26, 27, 28) aufweist. (Fig. 7, 8, 9).

4. Transporttank nach einem der Ansprüche 1 bis 3, dadurch gekennzeichnet, daß die Schwallschutzelemente (17) Teile aus flexiblem Bandmaterial aufweisen.

5. Transporttank nach Anspruch 4, dadurch gekennzeichnet, daß die Bandmaterialteile generell Ω-förmig an dem Gestänge (14) befestigbar sind.

6. Transporttank nach Anspruch 5, soweit dieser auf Anspruch 2 rückbezogen ist, dadurch gekennzeichnet, daß die Enden der Bandmaterialteile zur Einführung mindestens eines Steges (23...28) des Gestänge-Kreuzprofils mit Schlitzen (30) oder Ausschnitten (33, 38) versehen sind. (Fig. 7, 8, 9).

7. Transporttank nach Anspruch 5 oder 6, dadurch gekennzeichnet, daß die Enden der Bandmaterialteile federnd an dem Gestänge (14) verspannbar sind.

8. Transporttank nach einem der Ansprüche 5 bis 7, dadurch gekennzeichnet, daß die Bandmaterialteile in ihrer Länge so bemessen sind, daß sie im eingebauten Zustand die Tankinnenwand nicht berühren.

9. Transporttank nach einem der Ansprüche 1 bis 8, dadurch gekennzeichnet, daß die Schwallschutzelemente (17) in mehreren Querschnittsebenen des Tanks und, gesehen in Tanklängsrichtung, versetzt montierbar sind.

## Claims

1. A transport tank for liquids having a manhole (13) and being internally provided with slosh guard elements (17) the size of which is so dimensioned that they can be introduced through the manhole (13) and which are detachably secured to a bar structure (14, 14a, 14b) which is also dimensioned such that it can be introduced through the manhole (13), characterized in that the bar structure (14, 14a, 14b) is made up of two parts which, in the assembled position, are interconnected by a toggle joint, which are supported by a structural member (18) adapted to be inserted in the manhole (13), and which are braced between the curved portions or in the knuckle zones (12) of the two tank end bottoms (11).

2. The transport tank of claim 1, characterized in that the bar structure comprises rails (14, 14a, 14b) of a cross profile.

3. The transport tank of claim 2, characterized in that the cross profile of the bar structure (14) includes two webs (25, 26, 27, 28) in at least one of the two mutually perpendicular cross-sectional directions. (Figs. 7, 8, 9)

4. The transport tank of any one of claims 1 to 3, characterized in that the slosh guard elements (17) include parts of flexible strip material.

5. The transport tank of claim 4, characterized in that the parts of strip material are adapted to be secured to said bar structure (14) in a generally Ω-shaped manner.

6. The transport tank of claim 5 as dependent on claim 2, characterized in that the ends of the parts of strip material are provided with slots (30) or cutouts (33, 38) for fitting therein at least one web (23...28) of the cross profile of the bar structure. (Figs. 7, 8, 9)

7. The transport tank of claim 5 or 6, characterized in that the ends of the parts of strip material are adapted to be resiliently clamped to said bar structure (14).

8. The transport tank of any of claims 5 to 7, characterized in that the parts of strip material have their lengths so dimensioned so that they do not contact the inner tank wall in the assembled condition.

9. The transport tank of any of claims 1 to 8, characterized in that the slosh guard elements (17) are adapted to be mounted in a plurality of cross-sectional planes of the tank and in a staggered manner as viewed in the longitudinal direction of the tank.

## Revendications

1. - Réservoir de transport pour des liquides comprenant un trou d'homme (13) et muni à l'intérieur d'éléments brise-flot (17) dont les dimensions sont telles qu'ils peuvent être introduits par le trou d'homme (13) et qui sont fixés de manière amovible sur une tringlerie (14, 14a, 14b) laquelle présente, elle aussi, des dimensions permettant son introduction par le trou d'homme (13), caractérisé en ce que la tringlerie (14, 14a, 14b) est assemblée à partir de deux pièces qui, à l'état monté, sont reliées entre elles par l'intermédiaire d'une articulation à genouillère, prennent appui sur un élément (18) pouvant être inséré dans le trou d'homme (13) et sont bloquées entre les voûtes ou dans les zones de carre (12) des deux fonds frontaux (11) du réservoir.

2. - Réservoir de transport selon la revendication 1, caractérisé en ce que la tringlerie comprend des rails (14, 14a, 14b) à profil en croix.

3. - Réservoir de transport selon la revendication 2, caractérisé en ce que le profil en croix de la tringlerie (14) présente deux barrettes (25, 26, 27, 28) dans au moins l'une des deux directions de la section transversale perpendiculaires l'une à l'autre (fig. 7, 8, 9).

4. - Réservoir de transport selon l'une des revendications 1 à 3, caractérisé en ce que les éléments brise-flot (17) comportent des parties réalisées dans un matériau flexible en bande.

5. - Réservoir de transport selon la revendication 4, caractérisé en ce que les parties en matériau en bande peuvent être fixées sur la tringlerie (14) de façon à présenter en général une forme en Ω.

6. - Réservoir de transport selon la revendication 5, dans la mesure où celle-ci se rapporte à la revendication 2, caractérisé en ce que les extrémités des parties en matériau en bande sont munies de fentes (30) ou de découpes (33, 38) pour l'introduction d'au moins une barrette (23 à 28) du profil en croix de la tringlerie (fig. 7, 8, 9).

7. - Réservoir de transport selon l'une des revendications 5 ou 6, caractérisé en ce que les extrémités des parties en matériau en bande peuvent être bloquées élastiquement sur la tringlerie (14),

8. - Réservoir de transport selon l'une des revendications 5 à 7, caractérisé en ce que les parties en matériau en bande présentent une longueur telle qu'à l'état monté elles ne touchent pas la paroi intérieure du réservoir.

9. – Réservoir de transport selon l'une des revendications 1 à 8, caractérisé en ce que les éléments brise-flot (17) peuvent être montés dans plusieurs plans de section transversale du réservoir et avec un décalage dans le sens longitudinal du réservoir.

FIG.2

FIG.1

FIG. 3

FIG. 4

FIG. 5

FIG. 6